# EUROPÄISCHE PATENTSCHRIFT

(11) **EP 2 977 194 B1**
(45) Veröffentlichungstag und Bekanntmachung des Hinweises auf die Patenterteilung: **12.04.2017**
(21) Anmeldenummer: 15001969.3
(22) Anmeldetag: 02.07.2015
(51) Int. Cl.: B30B 5/06, B32B 37/10, H05B 6/76

(54) **DOPPELBANDHEIZPRESSE**
DOUBLE STRIP HEATING PRESS
PRESSE À CHAUD À DOUBLE BANDE

(30) Priorität: 21.07.2014 DE 102014110235
(43) Veröffentlichungstag der Anmeldung: 27.01.2016
(73) Patentinhaber: Wemhöner Surface Technologies GmbH & Co. KG, 32052 Herford (DE)
(72) Erfinder: Linhorst, Christian, 33824 Werther (DE); Melies, Hans, 33449 Langenberg (DE)
(74) Vertreter: Rolf, Gudrun, LL.M

(56) Entgegenhaltungen:
- EP-A1- 2 527 144
- EP-A1- 2 767 389
- US-A- 4 570 045
- US-B1- 6 287 410

## Beschreibung

Die Erfindung betrifft eine Doppelbandheizpresse mit als Rollentischen ausgebildeten oberen und unteren Presstischen mit Stützrollen für quer zur Transportrichtung von Werkstücken darauf abgestützte Tragrohre, auf denen mikrowellendurchlässige Transportbänder abrollen, wobei zwischen benachbarten Tragrohren eines Rollentisches parallel dazu angeordnete stabförmige Mikrowellenantennen angeordnet sind, sowie eine Abschirmung zur strahlungsdichten und elektrisch leitenden Überbrückung der Spalten zwischen den Tragrohren, gemäß dem Oberbegriff des Anspruchs 1.

Eine solche Doppelbandheizpresse ist bekannt, DE 10 2013 101 512 A1, bei der die Abschirmung benachbarter Tragrohre mittels diese strahlungsdicht kurzschließende Kontaktleisten erfolgt.

Solche bekannten Kontaktleisten unterliegen jedoch dem mechanischen Verschleiß, wodurch die Gefahr des Abhebens einzelner Kontaktlaschen von den Tragrohren gegeben ist, sodass dort die Möglichkeit des Entstehens eines Lichtbogens besteht, der eine Kontaktleiste, etwa durch das Abschmelzen einer oder mehrerer Kontaktlaschen, noch weiter schädigen kann, wodurch eine wirksame Abschirmung der Doppelbandheizpresse gegen austretende Mikrowellenstrahlung nicht mehr in ausreichendem Maße sichergestellt werden könnte. Zudem könnte ein solcher Lichtbogen bei zusätzlichem Vorhandensein von brennbarem Material, wie etwa Holzstaub, zu dessen Entzündung führen.

Aufgabe der Erfindung ist es, die bekannte Doppelbandheizpresse dahingehend zu optimieren, dass eine dauerhaft wirksame und wenig verschleißanfällige Abschirmung der Mikrowellenstrahlung erzielt werden kann.

Die Lösung dieser Aufgabe ergibt sich in Verbindung mit den Merkmalen des Oberbegriffes des ersten Patentanspruches in Verbindung mit den technischen Merkmalen des kennzeichnenden Teils dieses Patentanspruches, insbesondere dadurch, dass die Abschirmung aus elektrisch leitenden oder mit solchen Oberflächen ausgestatteten Kontaktrohren besteht, die spaltfrei zwischen jeweils zwei benachbarten Tragrohren, gleichzeitig auf beiden abrollend, gelagert sind.

Durch diese erfinderische Lösung mittels die bekannten Kontaktleisten ersetzenden Kontaktrohren wird ein möglicher mechanischer Verschleiß der Abschirmung weitestgehend vermieden, ebenso wie sich die gegenseitigen Kontaktflächen permanent ändern, sodass kein bleibender Spalt zwischen einem Kontaktrohr und einem Tragrohr erhalten bleibt, wodurch auch die Gefahr des Entstehens von Lichtbögen aufgrund hoher Potenzialunterschiede grundsätzlich vermindert werden kann.

Ein weiterer Vorteil der erfinderischen Lösung besteht in den von den Kontaktrohren erzeugten konvexen Begrenzungsflächen des Mikrowellenofeninnenraumes der Doppelbandheizpresse, die aufgrund Ihrer Reflexions-eigenschaften zu einer deutlichen Leistungssteigerung bei der Wärme-erzeugung in den Werkstücken führen.

Weitere vorteilhafte Ausgestaltungen des Gegenstandes der Erfindung ergeben sich mit und in Kombination aus den nachfolgenden Unteransprüchen.

Entsprechend einer besonders bevorzugten Ausführungsform der erfinderischen Doppelbandheizpresse werden die Kontaktrohre über ihre Länge permanent an die Tragrohre angedrückt gehalten, wodurch sichergestellt werden kann, dass zwischen den Tragrohren und den Kontaktrohren keine Luftspalte entstehen, die zu großen Potenzialunterschieden und dadurch bedingten Lichtbögen führen könnten, sodass zum einen permanent eine vollständig geschlossene Begrenzungsfläche des Mikrowellenofeninnenraumes der Doppelbandheizpresse gewährleistet werden kann, ebenso wie eine Zerstörung der Bauteile durch Lichtbögen, die zudem möglicherweise in den Rollentischen sich angelagerten Holzstaub entzünden könnte, vollständig ausgeschlossen ist.

Die Kontaktrohre weisen bevorzugt einen größeren Außendurchmesser auf als die freien Abstandsmaße benachbarter Tragrohre betragen, wobei jeweils ein Kontaktrohr von der dem Transportband entgegengesetzten Seite an zwei benachbarte Tragrohre angedrückt gehalten wird, sodass dieses eine entgegengesetzte Drehrichtung zu der der Tragrohre erfährt, aber im Kontaktbereich keine Relativbewegung zwischen den Oberflächen des Kontaktrohres und der Tragrohre stattfindet. Hierdurch wird ein mechanischer Verschleiß der Oberflächen weitestgehend vermieden.

Um die Funktion jedes Kontaktrohres über seine Länge sicherzustellen, die der Länge der Tragrohre entspricht, ist unterhalb des Kontaktrohres eine zusätzliche Stützwelle angeordnet, die mit einer dauerelastischen Ummantelung ausgestattet ist, wobei diese Stützwelle auf benachbarten Stützrollen benachbarter Tragrollen rotieren könnend gelagert ist, und die Konstruktion so ausgeführt ist, dass die Stützwelle wieder die Drehrichtung der Tragrohre aufweist, sodass in einem Rollentisch im wesentlichen Rollreibung vorherrscht, bis auf die Bereiche der äußeren Tragrollen der Rollentische, die gegen austretende Mikrowellenstrahlung, wie bisher bekannt, über Kontaktleisten mit Kontaktlaschen über Schleifkontakte mechanisch abgeschirmt sind.

Die Ummantelung der Stützwelle besteht vorteilhafterweise aus einem mikrowellenneutralen Silikon- oder Kautschukmaterial, sodass die dauerelastische Ummantelung dauerhaft ihre Funktion erfüllen kann. Die Anordnung der Ummantelung auf der Stützwelle kann dabei bevorzugt kraftschlüssig über ein elastisches Vorspannen der Umhüllung auf der Stützwelle erfolgen.

Ein Kontaktrohr und eine Stützwelle werden dabei vorteilhaft stirnseitig jeweils in einem gemeinsamen Halter geführt bzw. gelagert, der seinerseits zwischen zwei Stützrollenachsen benachbarter Tragrohre gehalten ist. Ein solcher Halter besteht bevorzugt aus nicht stromleitendem und mikrowellenneutralem Kunststoffmaterial, insbesondere aus PTFE. Die Kontaktrohre ihrerseits sind mit strahlungsdichten Rohrstopfen aus Metall verschlossen, wobei diese mit zentrischen Federkugeln ausgestattet sind, mittels derer die Kontaktrohre elektrisch leitend an den Rollentischen und damit am Gehäuse der Doppelbandheizpresse geerdet sind.

Nachfolgend wird ein Ausführungsbeispiel der Erfindung anhand von Zeichnungen näher beschrieben. Es zeigen:
- Fig. 1: eine geschnittene Teilansicht durch zwei Rollentische einer Doppelbandheizpresse,
- Fig. 2: die Doppelbandheizpresse gemäß Fig. 1 mit kenntlich gemachtem Mikrowellenofeninnenraum und angedeuteter Strahlungsrichtung der Mikrowellenantennen, und
- Fig. 3: eine geschnittene Teilaufsicht auf einen Rollentisch.

Die Doppelbandheizpresse 1 besteht aus zwei Rollentischen 3 mit jeweils umlaufenden Transportbändern 5, zwischen denen die Werkstücke 6 mit Druck- und Mikrowellenenergie aus den Mikrowellenantennen 4 beaufschlagt werden, um wasserhaltigen Klebstoff zu erwärmen und auszuhärten und dabei aus einem mehrschichtigen Werkstückstapel ein einteiliges Werkstück 6 herzustellen, welches in Transportrichtung 20 durch die Doppelbandheizpresse 1 hindurchbewegt wird..

In einem Rollentisch 3 sind horizontal benachbart eine Vielzahl von Tragrohren 7 angeordnet, die abschnittsweise auf in Stützrollenhaltern 22 auf Stützrollen-achsen 19 gelagerten Stützrollen 2 abgestützt werden, wobei in jedem zweiten Zwischenraum zwischen den Tragrollen 7 eine parallel längsverlaufende Mikrowellenantenne 4 angeordnet ist, die durch das mikrowellendurchgängige Transportband 5 auf ein Werkstück 6 einwirken kann.

Zwischen den Tragrohren 7 werden von der dem Transportband 5 entgegengesetzten Seite Kontaktrohre 8 an die Tragrohre 7 angedrückt gehalten, wobei diese Kontaktrohre 8, ebenso wie die Tragrohre 7, eine metallische Oberfläche aufweisen oder gänzlich aus Metall hergestellt sind, um auftreffende Mikrowellenstrahlung 14 reflektieren zu können.

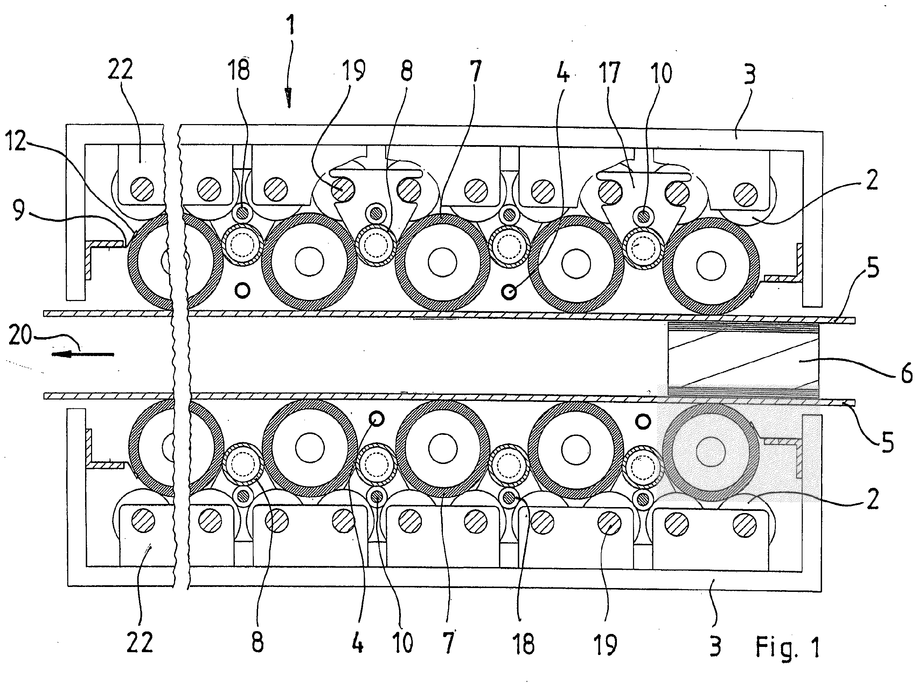

Um einen spaltfreien Kontakt zwischen Tragrohren 7 und Kontaktrohren 8 zu gewährleisten, werden die Kontaktrohre 8 von der dem Transportband 5 entgegengesetzten Seite über Stützwellen 10, die mit dauerelastischen Ummantelungen 18 versehen sind, in die Spalten zwischen den Tragrohren 7 hineingedrückt, wobei die Stützwellen 10 ihrerseits auf zueinander gerichteten Stützrollen 2 zweier benachbarter Tragrohre 7 abrollen könnend gelagert sind, sodass insgesamt eine bis auf die Rollreibung reibungsfreie Lagerung der einzelnen Bauteile erzeugt ist. Nur im Übergang zu den Gehäusen der Rollentische 3 sind randseitig Kontaktleisten 9 vorgesehen, die mit Kontaktlaschen 12 auf den Oberflächen der äusseren Tragrohre 7 aufliegend angeordnet sind, wie dies in Fig. 1 auch dargestellt ist.

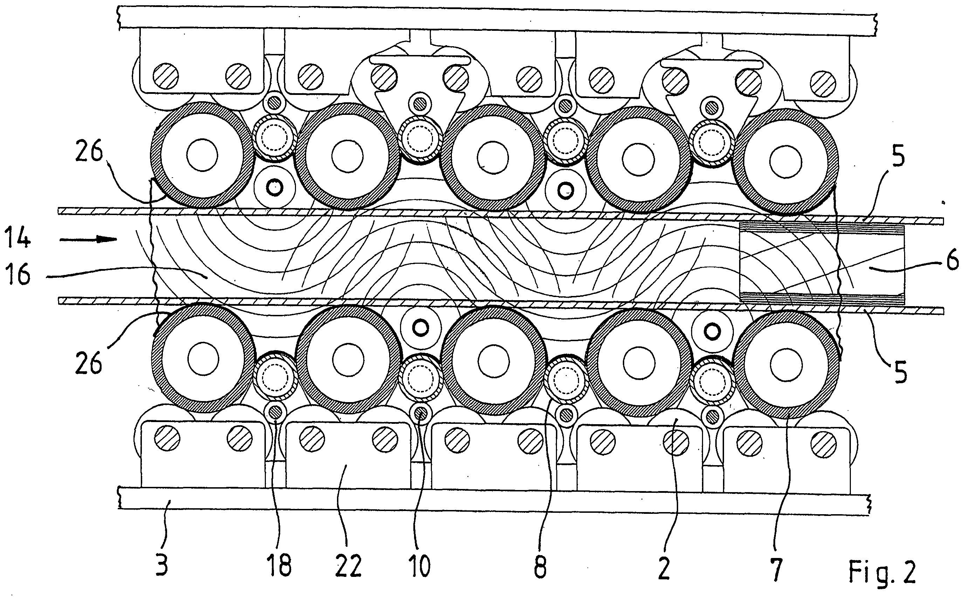

Fig. 2 zeigt dagegen die Doppelbandheizpresse 1 gemäß Fig. 1, wobei in dieser Figur der Mikrowellenofeninnenraum 16 verdeutlicht dargestellt ist, der von einer Begrenzungsfläche 26 aus den Oberflächen der Tragrohre 7 und der Kontaktrohre 8 gebildet wird.

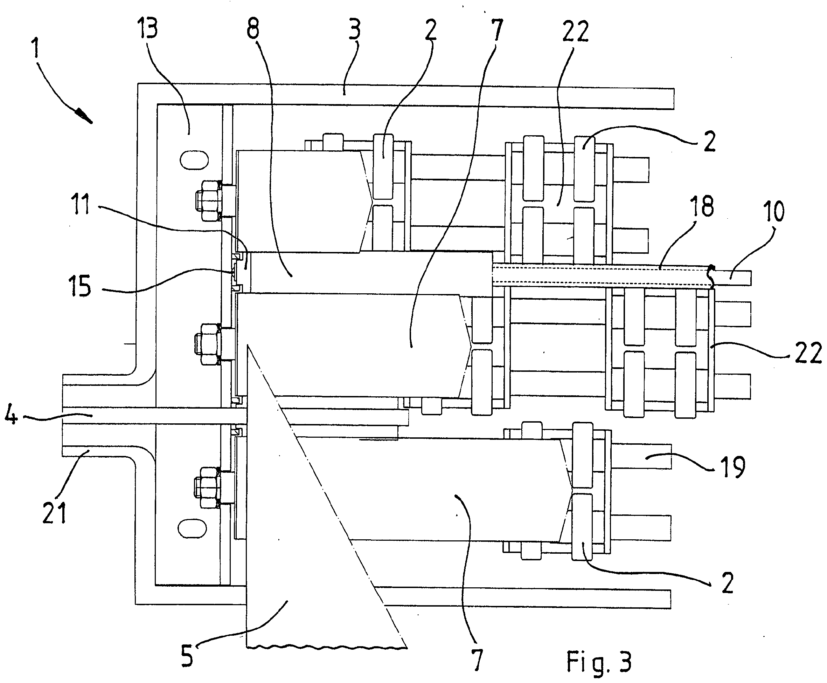

In der Fig. 3 sind in einer Draufsicht auf einem Rollentisch 3 der Doppelbandheizpresse 1 eine Anordnung der horizontal angeordneten Tragrohre 7 dargestellt, ebenso wie die dazwischen verlaufenden Mikrowellenantennen 4 mit einer nur angedeuteten Einspeisung 21 der Mikrowellenenergie. Die stirnseitig kugelgelagerten Tragrohre 7 sind über Winkel 13 am Rollentisch 3 angeordnet, ebenso wie sich die mit Federkugeln 15 bestückten Rohrstopfen 11 der Kontaktrohre 8 an diesem Winkel 13 abstützen und über diese Lagerung auch geerdet sind.

## Patentansprüche

1. Doppelbandheizpresse (1) mit als Rollentischen (3) ausgebildeten oberen und unteren Presstischen mit Stützrollen (2) für quer zur Transportrichtung (20) von Werkstücken (6) darauf abgestützte Tragrohre (7), auf denen mikrowellendurchlässige Transportbänder (5) abrollen und zwischen benachbarten Tragrohren (7) eines Rollentisches (3) parallel angeordneten stabförmigen Mikrowellenantennen (4) sowie durch eine Abschirmung strahlungsdichte und elektrisch leitende Überbrückung der Spalten zwischen den Tragrohren (7), **dadurch gekennzeichnet, dass** die Abschirmung aus elektrisch leitenden oder mit solchen elektrisch leitenden Oberflächen ausgestatteten Kontaktrohren (8) besteht, die spaltfrei zwischen jeweils zwei benachbarten Tragrohren (7), darauf abrollend, gelagert sind.

2. Doppelbandheizpresse nach Anspruch 1, **dadurch gekennzeichnet, dass** die Kontaktrohre (8) über ihre Länge an die Tragrohre (7) angedrückt gehalten sind.

3. Doppelbandheizpresse nach Anspruch 2, **dadurch gekennzeichnet, dass** die Kontaktrohre (8) einen größeren Außendurchmesser aufweisen als die freien Abstandsmaße benachbarter Tragrohre (7) betragen und jeweils ein Kontaktrohr (8) von der dem Transportband (5) entgegengesetzten Seite an zwei Tragrohren (7) angedrückt gehalten ist.

4. Doppelbandheizpresse nach Anspruch 3, **dadurch gekennzeichnet, dass** zwischen zwei benachbarten Stützrollen (2) benachbarter Tragrollen (7) und dem Kontaktrohr (8) eine Stützwelle (10) angeordnet ist, die mit einer dauerelastischen Ummantelung (18) ausgestattet ist.

5. Doppelbandheizpresse nach Anspruch 4, **dadurch gekennzeichnet, dass** die dauerelastische Ummantelung (18) aus einem Silikon- oder Kautschukmaterial besteht.

6. Doppelbandheizpresse nach Anspruch 4, **dadurch gekennzeichnet, dass** jeweils ein Kontaktrohr (8) und eine Stützwelle (10) stirnseitig jeweils in einem gemeinsamen Halter (17) geführt oder gelagert sind, der seinerseits zwischen zwei Stützrollenachsen (19) der Stützrollen (7) benachbarter Tragrollen (7) gehalten ist.

7. Doppelbandheizpresse nach Anspruch 6, **dadurch gekennzeichnet, dass** der Halter (17) aus nicht stromleitenden Kunststoffmaterial besteht.

8. Doppelbandheizpresse nach einem der vorgenannten Ansprüche, **dadurch gekennzeichnet, dass** die Kontaktrohre (8) stirnseitig mit strahlungsdichten Rohrstopfen (11) verschlossen sind.

9. Doppelbandheizpresse nach Anspruch 8, **dadurch gekennzeichnet, dass** die Rohrstopfen (11) zentrische Federkugeln (15) aufweisen, mittels derer die Kontaktrohre (8) elektrisch leitend am Gehäuse der Doppelbandpresse (1) geerdet sind.

## Claims

1. Double-belt heating press (1) with upper and lower press tables which are formed as roller tables (3) and have supporting rollers (2) for carrying tubes (7) supported on said rollers transversely to the transporting direction (20) of workpieces (6), on which carrying tubes there roll microwave-permeable transporting belts (5), and rod-shaped microwave antennas (4), which are arranged parallel between adjacent carrying tubes (7) of a roller table (3), and bridging of the gaps between the carrying tubes (7), which by means of a shielding is impermeable to radiation and is electrically conducting, **characterized in that** the shielding consists of contact tubes (8), which are electrically conducting or are provided with such electrically conducting surfaces and are mounted without any gap respectively between two adjacent carrying tubes (7), rolling on the latter.

2. Double-belt heating press according to Claim 1, **characterized in that**, over their length, the contact tubes (8) are held pressed against the carrying tubes (7).

3. Double-belt heating press according to Claim 2, **characterized in that** the contact tubes (8) have a greater outside diameter than the free clearances between adjacent carrying tubes (7) and in each case a contact tube (8) is held pressed against two carrying tubes (7) from the side opposite from the transporting belt (5).

4. Double-belt heating press according to Claim 3, **characterized in that** a supporting shaft (10), which is provided with a permanently elastic sheathing (18), is arranged between two adjacent supporting rollers (2) of adjacent carrying rollers (7) and the contact tube (8).

5. Double-belt heating press according to Claim 4, **characterized in that** the permanently elastic sheathing (18) consists of a silicone or rubber material.

6. Double-belt heating press according to Claim 4, **characterized in that** in each case a contact tube (8) and a supporting shaft (10) are guided or mounted at the end faces respectively in a common holder (17), which for its part is held between two supporting roller spindles (19) of the supporting rollers (7) of adjacent carrying rollers (7).

7. Double-belt heating press according to Claim 6, **characterized in that** the holder (17) consists of non-current-conducting plastics material.

8. Double-belt heating press according to one of the preceding claims, **characterized in that** the contact tubes (8) are closed at the end faces by radiation-impermeable tube plugs (11).

9. Double-belt heating press according to Claim 8, **characterized in that** the tube plugs (11) have central spring balls (15), by means of which the contact tubes (8) are earthed in an electrically conducting manner on the housing of the double-belt press (1).

## Revendications

1. Presse à chaud à double bande (1) comportant des tables de pressage supérieures et inférieures réalisées sous la forme de tables à rouleaux (3) comportant des rouleaux de support (2) destinés à des tubes porteurs (7) supportés sur ceux-ci transversalement à la direction de transport (20) de pièces à usiner (6), sur lesquels des bandes de transport (5) transparentes aux micro-ondes se déroulent, et comportant des antennes à micro-ondes (4) en forme de tiges disposées parallèlement entre des tubes porteurs (7) voisins d'une table à rouleaux (3) ainsi qu'un pontage opaque au rayonnement du fait d'un blindage et électriquement conducteur disposé sur les interstices entre les tubes du support (7), **caractérisée en ce que** le blindage est constitué de tubes de contact (8) électriquement conducteurs ou dotés de surfaces électriquement conductrices de ce type, qui sont montés sans interstice entre deux tubes porteurs (7) voisins respectifs, se déroulant sur ceux-ci.

2. Presse à chaud à double bande selon la revendication 1, **caractérisée en ce que** les tubes de contact (8) sont maintenus appuyés sur toute leur longueur sur les tubes porteurs (7).

3. Presse à chaud à double bande selon la revendication 2, **caractérisée en ce que** les tubes de contact (8) présentent un diamètre extérieur supérieur à l'écartement libre entre des tubes porteurs (7) voisins et **en ce qu'**un tube de contact respectif (8) est maintenu appuyé par la face opposée à la bande de transport (5) contre deux tubes porteurs (7).

4. Presse à chaud à double bande selon la revendication 3, **caractérisée en ce qu'**un arbre de support (10) est disposé entre deux rouleaux de support (2) voisins de rouleaux porteurs (7) voisins et le tube de contact (8), qui est réalisé de manière à comporter une enveloppe (18) à élasticité permanente.

5. Presse à chaud à double bande selon la revendication 4, **caractérisée en ce que** l'enveloppe à élasticité permanente (18) est constituée d'un matériau de silicone ou de caoutchouc.

6. Presse à chaud à double bande selon la revendication 4, **caractérisée en ce qu'**un tube de contact (8) et un arbre de support (10) sont respectivement guidés ou montés vers l'avant dans un support commun (17) qui est maintenu vers l'avant entre deux axes de rouleau de support (19) des rouleaux de support (7) de rouleaux porteurs (7) voisins.

7. Presse à chaud à double bande selon la revendication 6, **caractérisée en ce que** le support (17) est constitué d'une matière plastique non électriquement conductrice.

8. Presse à chaud à double bande selon l'une quelconque des revendications précédentes, **caractérisée en ce que** les tubes de contact (8) sont fermés vers l'avant par des obturateurs (11) opaques au rayonnement.

9. Presse à chaud à double bande selon la revendication 8, **caractérisée en ce que** les obturateurs (11) présentent des billes à ressorts (15) centrées au moyen desquelles les tubes de contact (8) sont électriquement mis à la terre sur le boîtier de la presse à chaud à double bande (1).
